# DEMANDE DE BREVET EUROPEEN

(11) **EP 0 675 386 A1**
(43) Date de publication de la demande: **04.10.1995**
(21) Numéro de dépôt: 95400632.6
(22) Date de dépôt: 22.03.1995
(51) Int. Cl.: G02F 1/1347

(54) **Ecran couleur réflectif à cristal liquide**

(30) Priorité: 29.03.1994 FR 9403666
(71) Demandeur: THOMSON-CSF, 75008 Paris (FR)
(72) Inventeur: Mahe, Loic, F-92402 Courbevoie Cédex (FR); Lehureau, Jean-Claude, F-92402 Courbevoie Cédex (FR)
(74) Mandataire: Guérin, Michel

(57) **Abrégé**

L'invention concerne un écran réflectif passif couleur, de bon contraste, à base de polymère dans lequel est dispersé du cristal liquide. Plus précisément, cet écran comprend trois types de cristal liquide M₁, M₂, M₃ de fréquences de résonances différentes dont l'orientation peut être commandée sélectivement en fréquence de manière à générer une couleur primaire : le rouge ou le vert ou le bleu. Ces trois types de cristaux peuvent être couplés à des colorants dichroïques cyan, magenta ou jaune, ils peuvent également être distribués dans des structures réseaux capables de réfléchir les couleurs primaires désirées.

## Description

Le domaine de l'invention est celui des écrans plats couleur et plus précisément celui des écrans plats utilisant des mélanges électrooptiques pour restituer une des couleurs primaires rouge, vert, bleu.

Actuellement, les écrans à cristaux liquides LCD représentent de bons candidats pour la fabrication d'écrans réflectifs passifs c'est-à-dire pour lesquels seul suffit un éclairage frontal en lumière blanche ambiante. Cependant, et bien qu'il soit possible de réaliser des LCD monochromes réflectifs de faible consommation (tels que ceux employés pour les dispositifs de montre-poignet), il n'existe pas encore d'écran LCD couleur réflectif et passif. En effet, pour qu'un dispositif LCD présente de bonnes caractéristiques colorimétriques, il a toujours été nécessaire d'utiliser un rétroéclairage (consommateur d'énergie, volumineux et coûteux).

Cette nécessité est liée essentiellement à deux facteurs. D'une part, la génération de couleurs à partir des couleurs primaires additives (rouge, vert, bleu) limite l'efficacité lumineuse au mieux à 33 %. En effet, aussi bien pour les écrans LCD avec rétroéclairage que pour les écrans émissifs, les couleurs sont obtenues par juxtaposition des pixels colorés rouges, verts et bleus. Ces derniers sont obtenus à partir de filtres qui absorbent au moins les deux tiers du spectre de la lumière incidente.

D'autre part, le principe de fonctionnement des LCD les plus répandus (tels que ceux employant des nématiques twistés ou super twistés ou encore des ferroélectriques) repose sur l'absorption d'une polarisation de la lumière incidente sous l'effet d'une commande électrique (un contraste est obtenu entre un état absorbant et un état non-absorbant du transducteur). Ce principe nécessite l'emploi de filtres polariseurs qui limitent l'efficacité lumineuse au mieux à 50 % pour un écran noir et blanc (seule la moitié de la lumière disponible est utilisée, l'autre moitié étant absorbée).

Pour pallier ces inconvénients, de nouveaux dispositifs ont été proposés. Il s'agit en particulier de dispositifs utilisant des matériaux transducteurs fonctionnant sans polariseurs : la modulation de la lumière incidente repose alors sur des mécanismes de diffusion commandés électriquement (un contraste est obtenu entre un état diffusant et un état non diffusant). Dans cette catégorie se rangent plus particulièrement les dispositifs qui mettent en oeuvre des mélanges de polymères et de cristaux liquides [("Polymer Dispersed Liquid Crystal" : J.L. Ferguson, SID International Symposium 1985, 16, 68), Brevets US 4 435 047 (1984); EP O 357 234 A2 (1990)].

Grâce à l'absence de polariseurs ces LCD diffusifs permettent un gain en efficacité lumineuse, mais celui-ci reste insuffisant pour les utiliser dans des dispositifs passifs avec génération de couleurs par additivité : des PDLC (Polymer Dispersed Liquid Crystal) renfermant des colorants dichroïques noirs ont ainsi été utilisés de cette manière (T. Uchida et al., Japan Display 1986, P. 312) mais la génération de couleurs par additivité spatiale conduit à un "blanc" dont l'aspect est très "gris". Il en résulte des pertes en contraste.

Pour réaliser un écran réflectif passif dont les couleurs seraient obtenues par additivité spatiale, il est envisageable d'associer une cellule de PDLC à un réflecteur de très fort gain (qui diffuse la lumière incidente avec une très forte directivité). Cependant un tel dispositif présenterait nécessairement un faible angle d'observation.

Dans ce contexte et pour obtenir un écran réflectif passif couleur de bon contraste, l'invention propose un dispositif dans lequel il est possible de générer les trois couleurs primaires sans grande consommation électrique et d'offrir un bon contraste sous un large angle d'observation. Dans le dispositif selon l'invention chaque pixel de l'écran est en mesure de générer une couleur quelconque sans avoir recours à des filtres et d'offrir un réel contraste entre le noir et le blanc. Plus précisément, l'invention propose un écran couleur réflectif et passif à base de polymère renfermant du cristal liquide caractérisé en ce qu'il comprend une structure Sp contenant trois types de cristal liquide M₁, M₂, M₃ de fréquences de résonances différentes fc₁, fc₂, fc₃ et des moyens pour commander sélectivement en fréquence l'orientation d'un des cristaux liquides de manière à générer une couleur primaire: le rouge ou le vert ou le bleu.

Il peut avantageusement s'agir d'un écran dans lequel la structure Sp comprend trois colorants dichroïques C₁ de couleur cyan, C₂ de couleur magenta et C₃ de couleur jaune. Chacun des colorants pouvant être couplés à un cristal liquide précis au sein de billes dispersées dans le polymère. Ainsi en commandant électriquement l'orientation d'un cristal liquide et par là-même celle du colorant dichroïque associé, il devient possible d'émettre uniquement la couleur rouge, ou la couleur verte ou la couleur bleue, ces trois couleurs étant respectivement les couleurs complémentaires des trois colorants utilisés cyan, magenta et jaune. Un tel fonctionnement sera explicité ultérieurement. Dans ce type de dispositif, il est possible d'obtenir un état blanc, lorsque les trois cristaux liquides M₁, M₂, M₃ sont orientés parallèlement au champ électrique qui leur est appliqué, par réflection sur un fond blanc. L'état noir quant à lui correspond à l'orientation des trois cristaux liquides perpendiculairement au plan de l'écran et donc à l'absorption de la lumière par les trois colorants C₁, C₂, C₃. On obtient ainsi un contraste bien meilleur que celui obtenu en passant d'un état diffusant à un état transparent (cas des dispositifs classiques utilisant des PDLC).

Dans une autre variante de l'invention, l'écran peut comprendre trois structures réseaux superposées S₁, S₂, S₃ à base de polymère dans lequel sont dispersées respectivement des billes de cristal liquide M'1, des billes de cristal liquide M'₂, des billes de cristal liquide M'3, la structure S₁ étant capable de réfléchir le rouge, la structure S₂ étant capable de réfléchir le vert, la structure S₃ étant capable de réfléchir le bleu. Dans cette configuration, il est possible de faire disparaître les structures réseaux et ainsi les rendre transparentes à la lumière incidente en jouant sur l'orientation du cristal liquide. En effet, en choisissant judicieusement un indice de réfraction pour le cristal liquide égal à celui du polymère lorsque ledit cristal liquide est orienté sous champ électrique, on est en mesure d'annuler la structure réseau, préalablement inscrite au sein de l'écran.

Dans l'écran couleur selon l'invention, on peut avantageusement utiliser une structure dans laquelle la structure Sp est insérée entre une électrode transparente et un ensemble de contre-électrodes définissant des zones de l'écran appelées pixels qui peuvent ainsi se colorer sélectivement en fonction de la nature du signal électrique appliqué (dépendance en fréquence).

Une commande du type matriciel tel qu'elle est pratiquée dans les écrans STN ou TFT est cependant mal adaptée à la forme complexe des signaux à appliquer à chaque pixel de l'écran selon l'invention. C'est pourquoi il peut être avantageux d'utiliser une structure dans laquelle chaque pixel est relié à un circuit intégré de commande au travers par exemple d'un circuit imprimé.

L'invention sera mieux comprise et d'autres avantages apparaîtront à la lecture de la description qui va suivre donnée à titre non limitatif, et des figures annexées parmi lesquelles :
- la figure 1 illustre un exemple de structure Sp élaborée à partir de PDLC;
   * la figure 1a montre le comportement de cette structure en l'absence de champ électrique (état OFF)
   * la figure 1b montre le comportement de cette structure en présence de champ électrique (état ON)
- la figure 2 illustre le comportement en fréquence du coefficient Δε relatif à l'anisotropie diélectrique pour trois cristaux liquides M₁, M₂, M₃ associés aux colorants C₁, C₂, C₃ utilisés dans la structure Sp comprise dans l'écran selon l'invention;
- la figure 3 schématise un exemple d'écran passif couleur selon l'invention utilisant un film de PDLC comprenant trois types de cristaux liquides et trois colorants associés;
- la figure 4 schématise un deuxième exemple d'écran passif couleur selon l'invention utilisant un ensemble de trois structures réseaux réfléchissant les trois couleurs primaires (rouge, vert, bleu).

L'écran couleur réflectif selon l'invention fonctionne grâce à un adressage en fréquence capable de sélectionner les couleurs primaires désirées. Ceci est rendu possible par la physique même des cristaux liquides utilisés.

En effet, du fait de leurs dipôles permanents et induits, les molécules de cristaux liquides présentent une anisotropie de constante diélectrique Δε = ε_{''} - ε_{⊥} (les directions parallèle et perpendiculaire étant repérées par rapport au grand axe de la molécule cristal liquide).

On distingue habituellement les molécules de type "p" d'anisotropie diélectrique positive (Δε > 0, habituellement de l'ordre de + 10 à + 20) des molécules de type "n" d'anisotropie diélectrique négative (Δε < 0 usuellement entre -1 et -3). Soumise à un champ électrique, une molécule de type "p" (respectivement de type "n") tend à s'aligner parallèlement (respectivement perpendiculairement) à la direction du champ.

A l'échelle macroscopique, cette anisotropie diélectrique est transférée des molécules aux assemblées de molécules et aux mélanges de cristaux liquides.

La méthode dite "d'adressage en fréquence" consiste à tirer parti de la dépendance en fréquence de cet effet macroscopique: pour la plupart des cristaux liquides, la constante diélectrique ε_{''} diminue avec les fréquences croissantes, tandis que ε⊥ reste invariant. On peut ainsi définir une fréquence caractéristique f_{c} pour laquelle ε_{''} = ε⊥ et le mélange diélectrique apparaît isotrope. Selon les mélanges f_{c} varie entre 100 kHz et 1 MHz.

Dans une variante de l'invention, l'écran couleur passif utilise trois types de cristaux liquides M₁, M₂ et M₃ avec des fréquences caractéristiques différentes deux à deux fc₁, fc₂, fc₃. Chaque cristal liquide est associé à un colorant dichroïque, c'est-à-dire que l'orientation d'un type de cristal liquide conditionne l'orientation du colorant dichroïque qui lui est associé. Typiquement cette association peut résulter de la préparation même de la structure Sp pouvant conduire à l'élaboration d'un polymère dans lequel sont dispersées des billes de cristal liquide renfermant des colorants anisotropes, absorbant une composante primaire rouge, vert ou bleu, soit dans le cas présent une première série de billes renfermant du cristal liquide M₁ et des molécules de colorant cyan, une seconde série de billes renfermant du cristal liquide M₂ et des molécules de colorant magenta, une troisième série de billes renfermant du cristal liquide M₃ et des molécules de colorant jaune. Il existe en effet différentes méthodes pour disperser des gouttelettes de cristal liquide dans une matrice polymère. L'une d'entre elles (E. Kaneko, "Liquid Crystal TV Displays", KTK Scientific Publishers, Tokyo 1987, Chapters 2.1 § 5.1) consiste à introduire des cristaux liquides dans une solution photodurcissable (habituellement un mélange de monomères et d'oligomère). On effectue la photopolymérisation en exposant l'ensemble à un rayonnement ultraviolet. La puissance de ce dernier et la durée du traitement permettent de contrôler avec précision la taille des gouttelettes de cristal liquide.

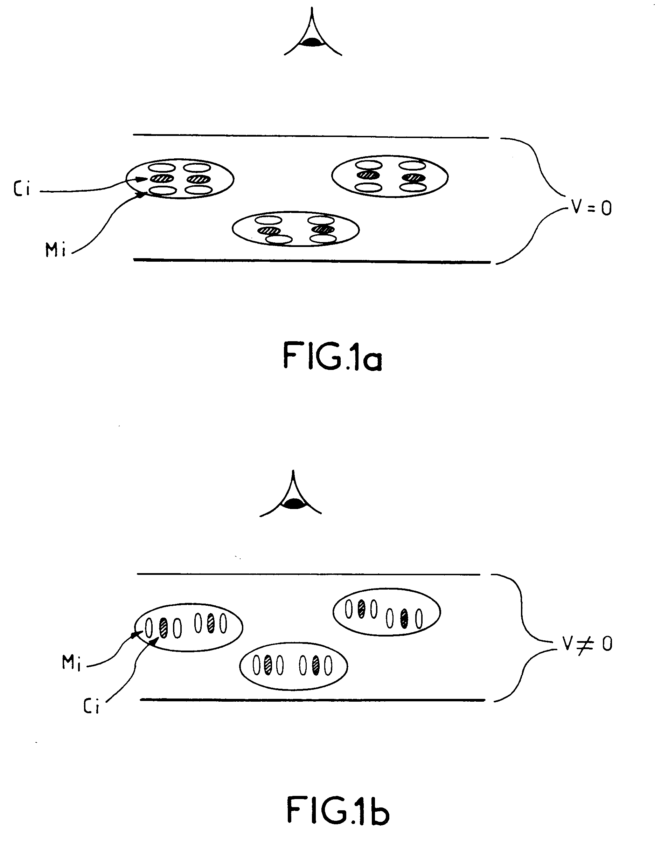

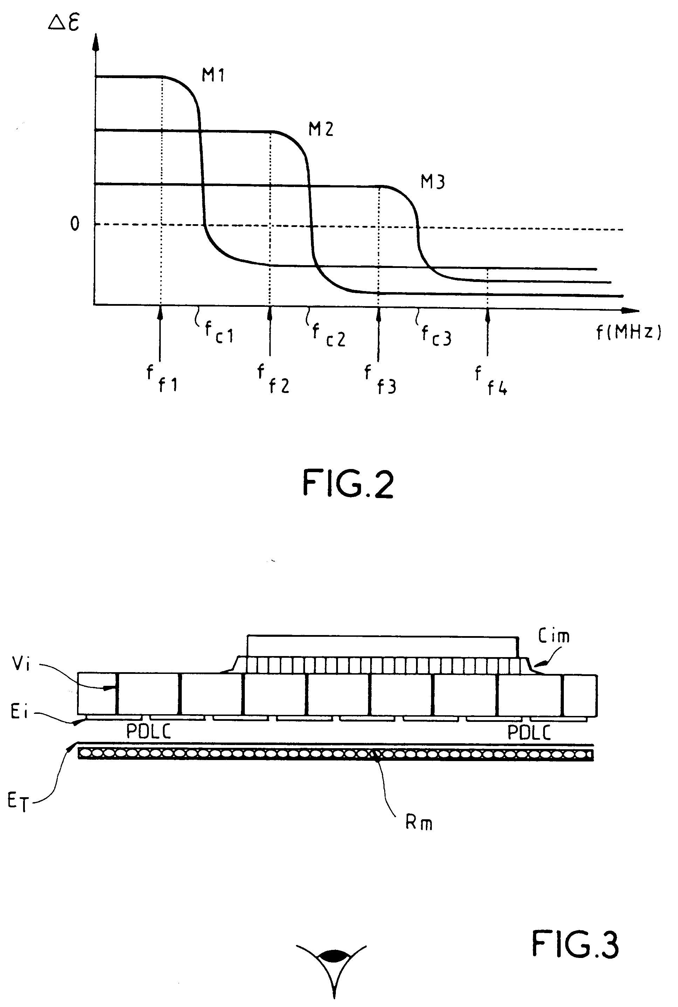

Ainsi lorsque la structure Sp est insérée entre deux jeux d'électrodes, sous l'action d'un champ électrique le mélange Mᵢ, observé dans l'axe du champ électrique apparaît transparent à l'état ON et à l'état OFF (en l'absence de champ électrique) on observe la couleur Cᵢ (du colorant Cᵢ associé au cristal liquide Mᵢ). La figure 1 illustre ce comportement qui est observé lorsque le cristal liquide présente un Δε positif. L'adressage en fréquence permet quant à lui d'obtenir un Δε positif ou bien un Δε négatif. A cet effet, la figure 2 illustre le comportement des (Δε)i en fréquence pour les cristaux liquides Mᵢ.

En se plaçant à une fréquence f_{f1} inférieure aux trois fréquences fc₁, fc₂, fc₃, les trois (Δε)i étant positifs, on obtient sous champ électrique un état transparent, la structure Sp située sur un fond blanc peut ainsi fournir un état blanc. En se plaçant à une fréquence f_{f4} supérieure aux trois fréquences fc₁, fc₂, fc₃, les trois (Δε)i sont négatifs, les trois types de colorants sont orientés parallèlement au plan de l'écran, et l'état noir est obtenu par absorption de la lumière par ces colorants. Entre ces deux états, pour que l'écran affiche la couleur complémentaire de C₁, il faut combiner des signaux d'adressage de fréquences f_{f1}, et f_{f4} avec des coefficients pondérés afin que Δε₁ soit positif et Δε₂ et Δε₃ soient négatifs. Dans le cas particulier illustré à la figure 2, le coefficient du signal de fréquence f_{f4} doit être supérieur à celui du signal en fréquence f_{f2} pour effectivement obtenir la couleur désirée. Ainsi si le colorant cyan est orienté parallèlement au champ électrique seule la couleur complémentaire en l'occurrence le rouge sera perçue par un observateur placé devant l'écran, les deux autres colorants absorbant le reste du spectre lumineux.

Pour que l'écran affiche la couleur complémentaire de C₂ il faut combiner les signaux d'adressage de fréquence f_{f2} et f_{f4} avec des coefficients pondérés afin que Δε₂ soit positif et Δε₁ et Δε₃ soient négatifs. Le colorant magenta est orienté parallèlement au champ électrique, la couleur complémentaire en l'occurrence le vert est perçu par un observateur placé devant l'écran.

Enfin pour que l'écran affiche la couleur complémentaire de C₃ (jaune), il faut utiliser un signal d'adressage de fréquence f_{f3} qui aura pour effet un Δε₃ positif et des Δε₁ et Δε₂ négatifs, de manière à faire apparaître la couleur bleue.

Pour obtenir toutes les couleurs intermédiaires (contenues dans le triangle des points couleurs rouge-vert-bleu) on peut combiner les trois types de signaux d'adressage de fréquence f_{f1}, f_{f2}, f_{f3} avec des coefficients adaptés.

La combinaison des signaux électriques pour obtenir la couleur désirée peut être réalisée de différentes façons. Il est notamment possible de combiner deux fréquences fₐ et f_{b} par convolution. Il est également possible d'utiliser un adressage temporel consistant pendant une fraction ta de la période trame à envoyer un signal de fréquence fₐ et pendant le reste de la période trame tb, à envoyer un signal de fréquence f_{b}. Le rapport ta/tb permet alors de pondérer la combinaison des deux signaux en faveur de l'un ou l'autre.

Les pondérations des différentes fréquences peuvent se faire de manière analogique par simple addition mais il est également possible de remplacer une fréquence sinusoïdale par le signal carré de même fréquence sans pour autant modifier le comportement du cristal liquide. C'est pourquoi il peut être envisagé d'envoyer successivement à une cadence très supérieure à la réponse du cristal liquide considéré, les quatre composantes carrées de fréquence F₁, F₂, F₃, F₄ durant des durées respectives, pondérées en fonction de la teinte désirée de manière à utiliser des drivers (dispositif d'amplification) à deux niveaux plus simples que les drivers analogiques.

La figure 3 illustre un exemple de réalisation d'écran selon l'invention utilisant un film de polymère dans lequel sont dispersées les trois séries de billes précitées renfermant respectivement les colorants C₁, C₂ et C₃. Il s'agit donc d'un écran équipé d'une électrode E_{T} transparente pouvant notamment être un substrat de polyester recouvert d'une couche conductrice d' ITO (oxyde d'indium et d'étain), côté observateur. On peut avantageusement interposer entre cette électrode et l'observateur, un réseau de microlentilles Rₘ afin de conférer à l'écran une meilleure directivité, permettant de relever artificiellement le niveau du blanc par rapport à l'environnement. Le film de PDLC est inséré entre l'électrode ET et un circuit imprimé double-faces comprenant une série de contre-électrodes Eᵢ (pouvant être des électrodes métalliques) connectées par des via Vᵢ à des circuits imprimés Cim.

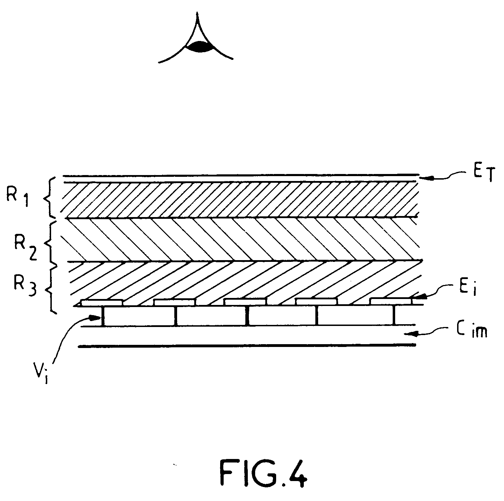

Dans une autre variante de l'invention, l'écran peut fonctionner non plus grâce à la présence de colorants cyan, magenta et jaune adressés sélectivement en fréquence mais grâce à la présence de couches réflectrices, réfléchissant sélectivement en fréquence le rouge, le vert ou le bleu. Les couches réflectrices peuvent résulter de l'inscription d'une structure réseau inscrite au sein d'une couche composite contenant du monomère photopolymérisable et du cristal liquide. En effet par interférence de deux faisceaux optiques il est possible d'induire la photopolymérisation du monomère entraînant la démixtion du mélange monomère-cristal liquide et générant ainsi du PDLC. Les franges d'interférences de deux faisceaux optiques situés de part et d'autre du composite créent périodiquement ledit PDLC alors qu'entre deux sous-couches de PDLC formé subsiste le mélange monomère-cristal liquide correspondant à des interférences destructrices des deux faisceaux. Il est alors possible de réaliser à nouveau une photopolymérisation de puissance et durée différentes de celles de la photopolymérisation précédente pour obtenir une autre concentration de billes de cristal liquide dans les zones noires de l'exposition précédente et ainsi aboutir à la structure réseau désirée. En agissant sur le pas du réseau formé il est ainsi possible de créer un réseau de diffraction réfléchissant sélectivement une des couleurs primaires (rouge, vert, bleu). Un tel réseau peut être rendu transparent à la lumière en appliquant un champ électrique capable d'orienter les molécules cristal liquide dispersées dans le PDLC, si l'indice de ces molécules a été judicieusement adapté à celui du polymère liant. Pour constituer l'écran selon l'invention, on peut avantageusement superposer trois réseaux R₁, R₂ et R₃, R₁ réfléchissant le rouge, R₂ réfléchissant le vert et R₃ réfléchissant le bleu, lesdits réseaux étant réalisés dans des mélanges polymères/cristal liquide, commandables électriquement par des signaux de fréquence propre f'₁, f'₂ et f'₃ et étant insérés entre une électrode transparente E_{T}, et des contre-électrodes Eᵢ, connectés à des circuits imprimés Cim. Cet exemple de réalisation est illustré à la figure 4.

## Revendications

1. Ecran couleur réflectif à base de polymère à cristal liquide, l'écran comprenant une structure Sp contenant trois types de cristal liquide M₁, M₂, M₃ de fréquences de résonances différences fc₁, fc₂, fc₃ et des moyens pour commander sélectivement en fréquence l'orientation d'un des cristaux liquides de manière à générer une couleur primaire : le rouge ou le vert ou le bleu, caractérisé en ce que la structure Sp comprend trois structures réseaux superposés S₁, S₂, S₃ à base de polymère dans lequel sont dispersées respectivement des billes de cristal liquide M₁, des billes de cristal liquide M₂ et des billes de cristal liquide M₃, la structure S₁ étant capable de réfléchir le rouge, la structure S₂ étant capable de réfléchir le vert, la structure S₃ étant capable de réfléchir le bleu.

2. Ecran couleur réflectif selon la revendication 1, caractérisé en ce que la structure Sp est insérée entre une électrode transparente et un ensemble de contre-électrodes définissant un pixel de l'écran, chaque pixel étant connecté à un circuit de commande.

3. Ecran couleur réflectif selon la revendication 2, caractérisé en ce que devant l'électrode transparente, on juxtapose un réseau de microlentilles.
